# EUROPEAN PATENT APPLICATION

(11) **EP 4 199 236 A1**
(43) Date of publication of application: **21.06.2023**
(21) Application number: 22811500.2
(22) Date of filing: 27.04.2022
(51) Int. Cl.: H01M 50/46, H01M 10/0583, H01M 10/0585

(54) **UNIT CELL AND BATTERY CELL COMPRISING SAME**

(30) Priority: 24.05.2021 KR 20210066460; 19.04.2022 KR 20220048386
(71) Applicant: LG Energy Solution, Ltd., Seoul 07335 (KR)
(72) Inventor: JEONG, Hyeok, Daejeon 34122 (KR); CHOI, Seong Won, Daejeon 34122 (KR); LEE, Yong Jun, Daejeon 34122 (KR); JUNG, Su Taek, Daejeon 34122 (KR); KWON, Soon Kwan, Daejeon 34122 (KR); BAE, Sangho, Daejeon 34122 (KR); KIM, Minwook, Daejeon 34122 (KR)
(74) Representative: Plasseraud IP
(86) International application number: PCT/KR2022/006015
(87) International publication number: WO 2022/250307

(57) **Abstract**

A unit cell according to one embodiment of the present disclosure includes: a separator and an electrode that are alternately stacked by a predetermined number; a first adhesive part that is positioned between the separator and the electrode and is composed of a first adhesive composition; and a second adhesive part that is positioned between the separator and the other separator and is composed of a second adhesive composition, wherein a dispersion degree of the first adhesive composition is larger than a dispersion degree of the second adhesive composition.

## Description

### [TECHNICAL FIELD]

The present disclosure relates to a unit cell and a battery cell including the same, and more particularly to a unit cell configured to adhere an electrode and a separator as well as a separator and a separator using an adhesive composition instead of a conventional lamination using heat and pressure, and a battery cell including the same.

### [BACKGROUND ART]

As technology development and demands for mobile devices increase, the demand for batteries as energy sources is rapidly increasing. In particular, a secondary battery has attracted considerable attention as an energy source for power-driven devices, such as an electric bicycle, an electric vehicle, and a hybrid electric vehicle, as well as an energy source for mobile devices, such as a mobile phone, a digital camera, a laptop computer and a wearable device.

Based on the shape of a battery case, such a secondary battery may be classified into a cylindrical battery where an electrode assembly is mounted in a cylindrical metal can, a prismatic battery where an electrode assembly is mounted in a prismatic metal can, and a pouch-type battery where an electrode assembly is mounted in a pouch type case formed of an aluminum laminate sheet. Here, the electrode assembly mounted in the battery case is a power generating element, having a structure including a cathode, an anode, and a separator interposed between the cathode and the anode, and capable of being charged and discharged. The electrode assembly may be classified as a jelly-roll type electrode assembly configured to have a structure in which a long sheet-type cathode and a long sheet-type anode, which are coated with active materials, are wound in a state where a separator is interposed between the cathode and the anode, and a stacked type electrode assembly configured to have a structure in which a plurality of cathodes and anodes are sequentially stacked in a state in which separators are interposed between the cathodes and the anodes.

Among them, particularly, a pouch-type battery, having a structure in which a stacked/folded type electrode assembly is mounted in a pouch-type battery case formed of an aluminum laminate sheet, has advantages such as low manufacturing costs, small weight, and easy shape deformation, and therefore, its usage is gradually increasing.

Here, in the case of a stacked type electrode assembly, it is generally manufactured by preparing unit cells in advance and then stacking a plurality of the unit cells. More specifically, the unit cell can apply heat and pressure through a stacking device in a state of being alternately stacked in the order of separator-anode-separator-cathode, and thereby, respective components can be fixed to each other.

However, after being alternately stacked in the order of separator-anode-separator-cathode, a part of the separator or electrode is pushed out in place before entering the stacking device or during the progress of stacking, which causes problems that a breakage occurs or a difference in adhesive strength occurs.

Therefore, there is a need to develop a unit cell capable of preventing movement between the electrode and the separator and preventing deformation and breakage of the electrode and the separator.

### [DETAILED DESCRIPTION OF THE INVENTION]

### [Technical Problem]

It is an object of the present disclosure to provide a unit cell configured to adhere an electrode and a separator as well as a separator and a separator using an adhesive composition instead of a conventional lamination using heat and pressure, and a battery cell including the same.

The objects of the present disclosure are not limited to the aforementioned objects, and other objects which are not described herein should be clearly understood by those skilled in the art from the following detailed description and the accompanying drawings.

### [Technical Solution]

According to an embodiment of the present disclosure, there is provided a unit cell comprising: a separator and an electrode that are alternately stacked by a predetermined number; a first adhesive part that is positioned between the separator and the electrode and is composed of a first adhesive composition; and a second adhesive part that is positioned between the separator and the other separator and is composed of a second adhesive composition, wherein a dispersion degree of the first adhesive composition is larger than a dispersion degree of the second adhesive composition.

The first adhesive composition may be composed of at least one of an ethylene-vinyl acetate (EVA)-based material, an acrylic-based material, and an epoxy-based material, and the second adhesive composition may be composed of at least one of an ethylene-vinyl acetate (EVA)-based material, an acrylic-based material, an epoxy-based material, a polyolefin-based material, a rubber-based material, a polyamide-based material, and a polyurethane-based material.

The second adhesive composition may be composed of at least one of a polyolefin-based material, a rubber-based material, a polyamide-based material, and a polyurethane-based material.

The separator may include a lower separator and an upper separator, the electrode may include a first electrode and a second electrode, wherein the lower separator, the first electrode, the upper separator, and the second electrode may be stacked in this order.

The first adhesive part may be positioned at least one selected from between the first electrode and the lower separator, between the first electrode and the upper separator, and between the second electrode and the upper separator.

The second adhesive part may be positioned between the upper separator and the lower separator.

The first adhesive part and the second adhesive part may each be formed in a pattern including a plurality of dots.

The plurality of dots may be spaced apart from each other.

According to another embodiment of the present disclosure, there is provided an electrode assembly formed by alternately stacking the unit cell, the first adhesive part includes an adhesive pattern disposed at the same position between the electrode and the separator.

According to another embodiment of the present disclosure, there is provided an electrode assembly formed by alternately stacking the unit cell, the first adhesive part includes an adhesive pattern disposed at a staggered form between the electrode and the separator.

According to an embodiment of the present disclosure, there is provided a battery cell comprising an electrolyte solution together with an electrode assembly in which the unit cells are alternately stacked.

The first adhesive part may be dissolved in the electrolyte solution.

The first adhesive composition may be composed of at least one of an ethylene-vinyl acetate (EVA)-based material, an acrylic-based material, and an epoxy-based material, and the second adhesive composition may be composed of at least one of an ethylene-vinyl acetate (EVA)-based material, an acrylic-based material, an epoxy-based material, a polyolefin-based material, a rubber-based material, a polyamide-based material, and a polyurethane-based material.

A content of the first adhesive composition and the second adhesive composition may be from 0.8 wt.% or more to 1.2 wt.% or less relative to the content of the electrolyte solution.

The content of the first adhesive composition may be from 0.6 wt.% or more to 0.9 wt.% or less relative to the content of the electrolyte solution, and the content of the second adhesive composition may be from 0.1 wt.% or more to 0.45 wt.% or less relative to the content of the electrolyte solution.

The second adhesive composition may be composed of at least one of a rubber-based material, a polyamide-based material, and a polyurethane-based material.

The content of the second adhesive composition may be from 0.1 wt.% or more to 0.2 wt.% or less relative to the content of the electrolyte solution.

The electrolyte solution may be composed of at least one of an organic liquid electrolyte, an inorganic liquid electrolyte, a solid polymer electrolyte, a gel-type polymer electrolyte, a solid inorganic electrolyte, and an inorganic molten electrolyte.

The battery cell may have a zigzag shape by folding the separator.

According to another embodiment of the present disclosure, there is provided a method of fabricating a unit cell, comprising: applying a first adhesive to either or both of (i) a first face of an electrode or (ii) an abutment region of a first separator; applying the first adhesive to either or both of (i) a second face of the electrode or (ii) an abutment region of a second separator, the second face of the electrode being on an opposite side of the electrode from the first face; applying a second adhesive to either or both of (i) a peripheral region of the first separator or (ii) a peripheral region of the second separator; and forming at least a portion of a stack by stacking the electrode between the first separator and the second separator such that the first face of the electrode abuts the abutment region of the first separator and the second face of the electrode abuts the abutment region of the second separator, the stack being formed such the peripheral region of each of the first and second separators extends outwardly beyond an edge of the electrode, the peripheral regions of each of the first and second separators opposing one another without the electrode interposed therebetween; wherein the first adhesive is configured to have a degree of dispersion in an electrolyte that is greater than a degree of dispersion of the second adhesive in the electrolyte.

The degree of dispersion of the first adhesive in the electrolyte may be greater than the degree of dispersion of the second adhesive in the electrolyte.

The peripheral region of each of the first and second separators may extend around a perimeter of the respective first and second separator, such that each of the peripheral regions encircles the abutment region of the respective first and second separator.

The first adhesive may be composed of at least one of an ethylene-vinyl acetate (EVA)-based material, an acrylic-based material, and an epoxy-based material, and the second adhesive is composed of at least one of an ethylene-vinyl acetate (EVA)-based material, an acrylic-based material, an epoxy-based material, a polyolefin-based material, a rubber-based material, a polyamide-based material, and a polyurethane-based material.

The first adhesive and the second adhesive may be each applied in a respective pattern of dots spaced apart from each other.

The dots in the pattern of dots of the first adhesive may be arranged in a grid of rows and columns of dots.

According to another embodiment of the present disclosure, there is provided a method of fabricating a battery cell, comprising: forming a stack formed by alternately stacking the unit cell of claim 20, and positioning the stack and an electrolyte in a battery case.

The method of fabricating a battery cell may further comprise dissolving at least a portion of the first adhesive into the electrolyte.

The electrolyte may be a solution composed of at least one of an organic liquid electrolyte, an inorganic liquid electrolyte, a solid polymer electrolyte, a gel-type polymer electrolyte, a solid inorganic electrolyte, and an inorganic molten electrolyte.

A total amount of the first adhesive in the battery case may be from 0.6% to 0.9% by weight of a total amount of the electrolyte in the battery case.

A total amount of the second adhesive in the battery case may be from 0.1% to 0.45% by weight of a total amount of the electrolyte in the battery case.

A total amount of the first adhesive and the second adhesive together in the battery case may be from 0.8% to 1.2% by weight of a total amount of the electrolyte in the battery case.

The total amount of the first adhesive in the battery case may be from 0.6% to 0.9% by weight of the total amount of the electrolyte in the battery case, and wherein the total amount of the second adhesive in the battery case is from 0.1% to 0.45% by weight of the total amount of the electrolyte in the battery case.

The second adhesive may be composed of at least one of a polyolefin-based material, a rubber-based material, a polyamide-based material, and a polyurethane-based material.

A total amount of the second adhesive in the battery case may be from 0.1% to 0.2% by weight of a total amount of the electrolyte in the battery case.

### [ADVANTAGEOUS EFFECTS]

According to the embodiments, the unit cell of the present disclosure and the battery cell including the same are configured to adhere an electrode and a separator as well as a separator and a separator using an adhesive composition instead of a conventional lamination using heat and pressure, thereby preventing movement between the electrode and the separator, and preventing deformation and breakage of the electrode and the separator.

The effects of the present disclosure are not limited to the effects mentioned above and additional other effects not described above will be clearly understood from the description of the appended claims by those skilled in the art.

### [BRIEF DESCRIPTION OF THE DRAWINGS]

Fig. 1 is an exploded perspective view of a unit cell according to an embodiment of the present disclosure;
Fig. 2 is a perspective view showing a unit cell in which the components of FIG. 1 are combined;
Fig. 3 is a cross-sectional view taken along the A-A axis of FIG. 2;
Fig. 4 is a top view of a battery cell according to another embodiment of the present disclosure; and
Fig. 5 is a diagram showing the results of the dispersion degree according to the content of the adhesive composition contained in the unit cell of Fig. 2.
Fig. 6 is a view showing Linear Sweep Voltammetry (LSV) of the adhesive composition included in the unit cell of FIG. 2;
Fig. 7 is a cross-sectional view showing an electrode assembly according to an embodiment of the present disclosure; and
Fig. 8 is a cross-sectional view showing an electrode assembly according to another embodiment of the present disclosure.

### [DETAILED DESCRIPTION OF THE EMBODIMENTS]

Hereinafter, various embodiments of the present disclosure will be described in detail with reference to the accompanying drawings so that those skilled in the art can easily implement them. The disclosed embodiments may be modified in various different ways, without departing the sprit or scope of the present disclosure.

Portions that are irrelevant to the description will be omitted to clearly describe the present disclosure, and like reference numerals designate like elements throughout the specification.

Further, the size and thickness of each element are arbitrarily illustrated in the drawings for convenience of the description, and the present disclosure is not necessarily limited to those illustrated in the drawings. In the drawings, the thickness of layers, regions, etc. are exaggerated for clarity. In the drawings, the thicknesses of some layers and regions are shown to be exaggerated for convenience of the description.

Further, throughout the specification, when a portion is referred to as "including" a certain component, it means that the portion includes stated components but not excludes any other components, unless explicitly described to the contrary.

Further, throughout the specification, when referred to as "planar", it means when a target portion is viewed from the upper side, and when referred to as "cross-sectional", it means when a target portion is viewed from the side of a cross section cut vertically.

Hereinafter, a unit cell according to an embodiment of the present disclosure will be described.

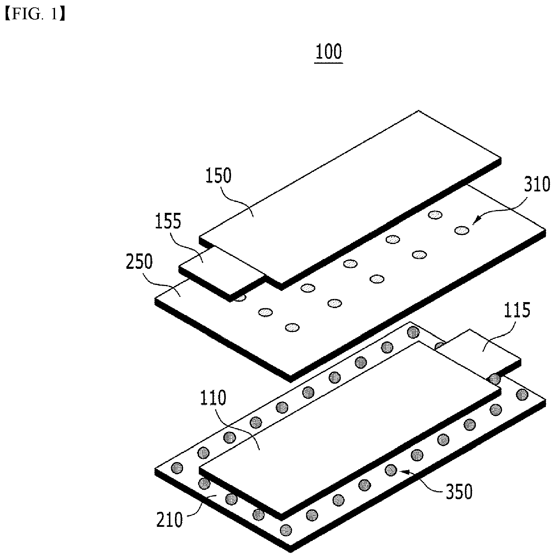

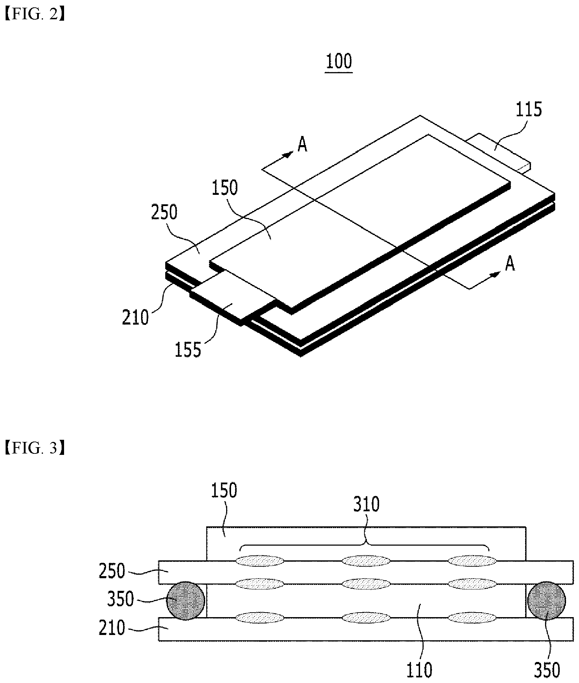

Fig. 1 is an exploded perspective view of a unit cell according to an embodiment of the present disclosure. Fig. 2 is a perspective view showing a unit cell in which the components of FIG. 1 are combined. Fig. 3 is a cross-sectional view taken along the A-A axis of FIG. 2.

Referring to Figs. 1 and 2, a unit cell according to an embodiment of the present disclosure includes: separators 210 and 250 and electrodes 110 and 150 that are alternately stacked by a predetermined number; a first adhesive part 310 that is positioned between the separators 210 and 250 and the electrodes 110 and 150 and is composed of a first adhesive composition; and a second adhesive part 350 that is positioned between separators 210 and 250 and the other separators 210 and 250 and is composed of a second adhesive composition.

More specifically, the separators 210 and 250 include a lower separator 210 and an upper separator 250, and the electrodes 110 and 150 include a first electrode 110 and a second electrode 150, wherein the lower separator 210, the first electrode 110, the upper separator 250 and the second electrode 150 may be stacked in this order.

Here, the first electrode 110 may include a first electrode tab 115 protruding in one direction, and the second electrode 150 may include a second electrode tab 155 protruding in one direction. In one example, as shown in Figs. 1 and 2, the stacking may be performed such that the upper separator 250 is positioned between the first electrode 110 and the second electrode 150, and the stacking may be performed such that the first electrode tab 115 of the first electrode 110 and the second electrode tab 155 of the second electrode 150 are positioned in opposite directions to each other. However, the present disclosure is not limited thereto, and a structure in which the first electrode tab 115 and the second electrode tab 155 are stacked so as to be positioned in the same direction may also be included in the embodiment of the disclosure.

Here, the first electrode 110 and the second electrode 150 may each include an electrode current collector and an active material layer positioned on the electrode current collector. Here, the active material layer may be formed of an electrode composition containing an electrode active material. More specifically, the first electrode 110 and the second electrode 150 may be a cathode and an anode. Here, the cathode may include a cathode current collector and an active material layer containing the cathode active material, and the anode may include an anode current collector and an active material layer containing the anode active material. In one example, the first electrode 110 may be an anode, and the second electrode 150 may be a cathode, but the present disclosure is not limited thereto, and vice versa may be included in the embodiment of the disclosure as well.

As the anode active material, an anode active material for a lithium secondary battery well-known in the art may be used, and as an example, a material such as lithium metal, lithium alloy, petroleum coke, activated carbon, graphite, silicon, tin, metal oxide or other carbons may be used.

In addition, in one example, the cathode active material may be selected from the group consisting of lithium-cobalt based oxide, lithium-manganese based oxide, lithium-nickel-manganese based oxide, lithium-manganese-cobalt based oxide, lithium-nickel-manganese-cobalt based oxide, and lithium iron phosphate, or may be a combination thereof or a composite oxide thereof.

The anode current collector or the cathode current collector is not particularly limited as long as it has high conductivity while not causing a chemical change in the battery, and for example, copper, stainless steel, aluminum, nickel, titanium, calcined carbon, or aluminum or stainless steel that is surface-treated with carbon, nickel, titanium, silver, or the like may be used.

The separators 210 and 250 may separate the first electrode 110 and the second electrode 150 and provide a moving passage of lithium ion. In addition, the separators 210 and 250 include a lower separator 210 and an upper separator 250, and separators made of the materials which are different from or equal to each other can be applied as the lower separator 210 and the upper separator 250.

In one example, the separators 210 and 250 can be used without particular limitation as long as they are normally used as separators in a lithium secondary battery. In particular, it is desirable that the separator has low resistance to ion movement of an electrolyte solution and is excellent in an electrolyte solution humidifying ability. Specifically, porous polymer films made of polyolefin-based polymers such as ethylene homopolymer, propylene homopolymer, ethylene/butene copolymer, ethylene/hexene copolymer and ethylene/methacrylate copolymer may be used alone, or a stacked structure having two or more layers thereof may be used.

Hereinafter, the first adhesive part 310 and the second adhesive part 350 included in the unit cell according to the embodiment of the disclosure are mainly described.

Referring to Figs. 1 and 3, the first adhesive part 310 may be positioned at least one selected from between the first electrode 110 and the lower separator 210, between the first electrode 110 and the upper separator 250, and between the second electrode 150 and the upper separator 250.

Therefore, the first adhesive part 310 can fix the first electrode 110 and the second electrode 150 to the lower separator 210 and/or the upper separator 250, respectively. That is, the first adhesive part 310 can prevent movement between the electrodes 110 and 150 and the separators 210 and 250, and prevent deformation and breakage of the electrodes 110 and 150 and the separators 210 and 250.

In addition, the second adhesive part 350 may be positioned between the upper separator 250 and the lower separator 210. More specifically, the second adhesive part 350 may be positioned between an end part of the lower separator 210 and an end part of the first electrode 110. Further, the second adhesive part 350 may be positioned between an end part of the upper separator 250 and an end part of the first electrode 110. In other words, the second adhesive part 350 is positioned on the surface of the separators 210 and 250 that is not in contact with the first electrode 110, wherein the second adhesive part 350 may be positioned along the periphery of the first electrode 110. Here, the second adhesive part 350 may be selectively positioned even in the portion where the electrode tabs 115 and 155 protruding from the electrodes 110 and 150 are positioned.

Therefore, the first electrode 110 is positioned between the upper separator 210 and the lower separator 250, and the upper separator 210 and the lower separator 250 can be fixed to each other by the second adhesive part 350, thereby preventing the first electrode 110 from moving between the upper separator 210 and the lower separator 250. In other words, the second adhesive part 350 fixes the upper separator 210 and the lower separator 250 to each other along the periphery of the first electrode 110, thus limiting the space in which the first electrode 110 can move, thus making it possible to prevent deformation and breakage of the first electrode 110.

Further, the first adhesive part 310 and the second adhesive part 350 may be formed in a pattern including a plurality of dots, respectively, as shown in Figs. 1 and 3. More specifically, the plurality of dots may be spaced apart from each other. Here, the intervals between the plurality of dots may be adjusted to be the same or different from each other, if necessary.

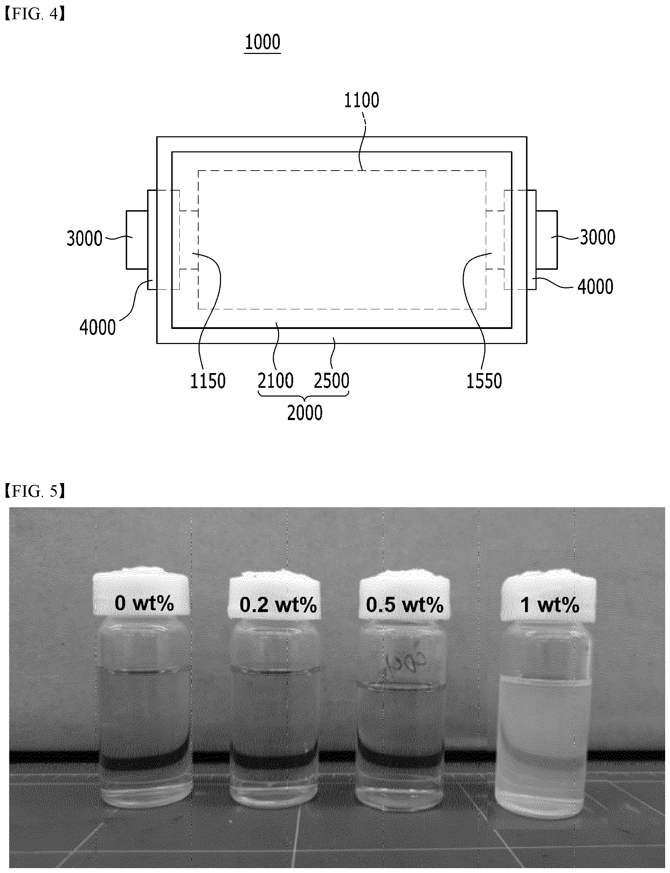

Therefore, the first adhesive part 310 and the second adhesive part 350 can be formed in the pattern described above, whereby when the electrolyte solution is injected into the electrode assembly 1100 (Fig. 4 ) including a plurality of unit cells 100, there is an advantage in that the electrode assembly 1100 (Fig. 4) can be rapidly impregnated. More specifically, since the plurality of dots are spaced apart from each other in the first adhesive part 310 and the second adhesive part 350, there is an advantage in that the electrolyte solution may flow between the plurality of dots. That is, according to the embodiment of the disclosure, the manufacturing time of the battery cells 100 (Fig. 4) can be relatively shortened, and the yield can also be improved.

Further, the first adhesive part 310 may be composed of a first adhesive composition, and the second adhesive part 350 may be composed of a second adhesive composition. More specifically, the first adhesive part 310 may block a lithium ion passage between the electrodes 110 and 150 and the separators 210 and 250. That is, it may be preferable that the first adhesive part 310 is composed of a material having a relatively high dispersion degree or a high solubility in an electrolyte solution. Here, the dispersion degree of the first adhesive composition included in the first adhesive part 310 may be equal to or larger than the dispersion degree of the second adhesive composition included in the second adhesive part 350.

According to an embodiment, the first adhesive composition included in the first adhesive part 310 and the second adhesive composition included in the second adhesive part 350 may include materials having the same composition. In one example, the first adhesive composition may be composed of at least one of an ethylene-vinyl acetate(EVA)-based material, an acrylic-based material, and an epoxy-based material, and the second adhesive composition may be composed of at least one of an ethylene-vinyl acetate (EVA)-based material, an acrylic-based material, an epoxy-based material, a polyolefin-based material, a rubber-based material, a polyamide-based material, and a polyurethane-based material.

Further, according to another embodiment, the first adhesive part 310 and the second adhesive part 350 may include materials having mutually different compositions. More specifically, the first adhesive composition and the second adhesive composition can have mutually different dispersibilities. In other words, the dispersion degree of the first adhesive composition may be larger than the dispersion degree of the second adhesive composition. In one example, the first adhesive composition may be composed of at least one of an ethylene-vinyl acetate (EVA)-based material, an acrylic-based material, and an epoxy-based material, and the second adhesive composition may be composed of at least one of a polyolefin-based material, a rubber-based material, a polyamide-based material, and a polyurethane-based material. For example, when the first adhesive composition is made of an acrylic material, it may be considered to exhibit a certain amount of solubility in the electrolyte because the acrylic material includes an ester group.

Therefore, the first adhesive composition included in the first adhesive part 310 may have relatively same or high dispersion degree when compared with the second adhesive composition included in the second adhesive part 350, whereby when the electrolyte solution is injected into the electrode assembly 1100 (Fig. 4) including a plurality of unit cells 100, it may be dissolved between the electrodes 110 and 150 and the separators 210 and 250. That is, in this case, the first adhesive part 310 positioned between the electrodes 110 and 150 and the separators 210 and 250 is dissolved in the electrolyte solution, so that it may obstruct the lithium ion passage between the electrodes 110 and 150 and the separators 210 and 250.

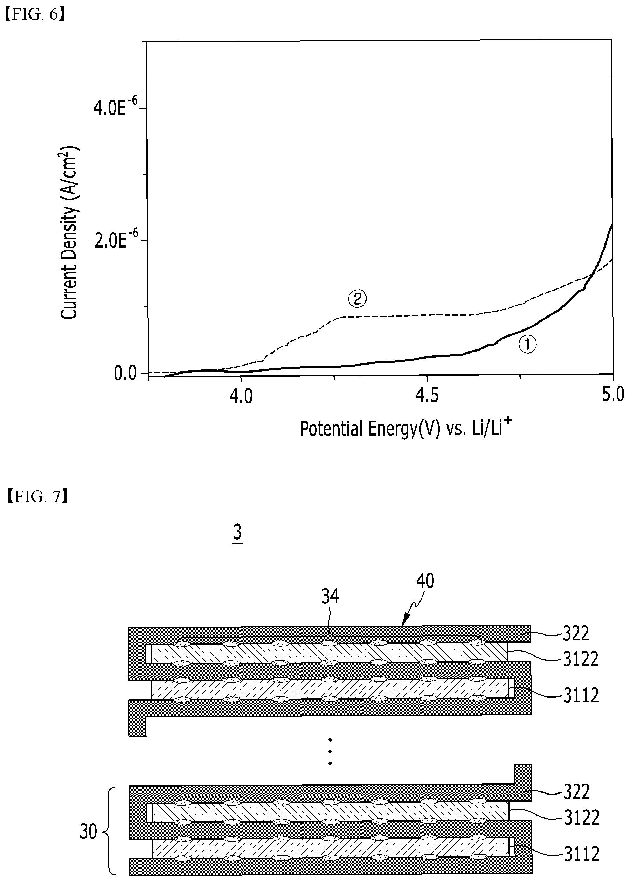

Referring to FIG. 6, unlike the first adhesive composition included in the first adhesive part 310 corresponding to the first position, in the case of the second adhesive composition included in the second adhesive part 350 corresponding to the second position, it is confirmed that the oxidation reaction occurs around 4.0 V as a result according to Linear Sweep Voltammetry (LSV). This may cause a side reaction in the battery cell, which may be a factor in reducing capacity and lifespan. Therefore, it is not preferable to use the second adhesive composition for the first adhesive part 310. One of the reasons for forming the second adhesive part 350 is to prevent folding of the separator caused during the electrolyte injection process.

The result as shown in Figure 6 may appear when at least one of an ethylene-vinyl acetatebased material, an acrylic material, and an epoxy-based material is used as the first adhesive composition, and a polyolefin-based material, a rubber-based material, a polyamide-based material, and a polyurethane-based material are used as the second adhesive composition.

The separator according to the embodiment described herein may be a Ceramic Coated Separator (CCS). In general, the separator has a raw film and a coating layer formed on at least one surface of the raw film, and the coating layer may include alumina powder and a binder to aggregate them. In Safety Reinforced Separator (SRS), a large amount of binder is coated on the surface of the coating layer, but in CCS, the binder is not coated on the surface of the coating layer, or the binder content distributed on the surface may be very low compared to SRS. For example, in the case of the CCS separator according to the present embodiment, the content of the binder coated on the surface of the coating layer of the separator may be about 3 wt% or less.

When the separator is CCS, since the internal electrodes included in the electrode assembly are transported in an unfixed state, alignment may be disturbed during transport. Of course, when the separator is CCS, it may be fixed by heat and pressure, but the alignment of the internal electrodes may be disturbed even in the process of transferring the electrode and the separator to the fixing device for heat and pressure after forming the laminate of the electrode and the separator. In addition, there is a disadvantage in that an expensive separator having a high binder content must be used to attach the electrode and the separator by heat and pressure. On the other hand, according to the present embodiment, it is possible to increase the fixing force while preventing the alignment of the internal electrodes from being disturbed during transport.

Fig. 4 is a top view of a battery cell according to another embodiment of the present disclosure.

Referring to Figs. 2 and 4, the battery cell 1000 according to another embodiment of the present disclosure includes an electrolyte solution together with the electrode assembly 1100 on which the above-mentioned unit cells 100 are alternately stacked. Here, first electrode tabs 1150 on which the first electrode tabs 115 of the unit cell 100 are stacked, and second electrode tabs 1550 on which the second electrode tabs 155 are stacked can be electrically connected to electrode leads 3000, respectively. Lead films 4000 may be positioned above and/or below the electrode leads 3000.

Further, the electrode assembly 1100 is mounted inside the battery case 120, wherein the electrode assembly 1100 may be positioned in the receiving part 2100 having a concave shape together with the electrolyte solution. In addition, a sealing part 2500 may be formed such that the outer peripheral surfaces of the battery case 2000 are mutually heat-fused and sealed.

In one example, the electrolyte solution can be comprised of at least one of an organic liquid electrolyte, an inorganic liquid electrolyte, a solid polymer electrolyte, a gel-type polymer electrolyte, a solid inorganic electrolyte, an inorganic molten electrolyte or the like, but the present disclosure is not limited thereto, and all the electrolyte solutions commonly used in the art can be included.

According to the embodiment of the disclosure, the first adhesive part 310 may be dissolved in the electrolyte solution. More specifically, the first adhesive composition included in the first adhesive part 310 may be dissolved in the electrolyte solution. More preferably, the first adhesive composition included in the first adhesive part 310 may be completely dissolved in the electrolyte solution.

Therefore, in the embodiment of the disclosure, the first adhesive part 310 is dissolved in the electrolyte solution, so that the lithium ion passage between the electrodes 110 and 150 and the separators 210 and 250 may not be obstructed, and the battery performance of the battery cell can be improved.

Here, the content of the first adhesive composition and the second adhesive composition may be from 0.8 wt.% or more to 1.2 wt.% or less relative to the content of the electrolyte solution. More specifically, the content of the first adhesive composition and the second adhesive composition may be from 0.85 wt.% or more to 1.15 wt.% or less relative to the content of the electrolyte solution. The content of the first adhesive composition and the second adhesive composition may be from 0.9 wt.% or more to 1.1 wt.% or less relative to the content of the electrolyte solution.

Therefore, the battery cell 1000 according to the embodiment of the disclosure includes the first adhesive composition and the second adhesive composition in a ratio within the above-described range, whereby the first adhesive part 310 positioned between the electrodes 110 and 150 and the separators 210 and 250 can be easily dispersed and dissolved in the electrolyte solution, and thereby, it may not obstruct the lithium ion passage between the electrodes 110 and 150 and the separators 210 and 250.

Unlike the same, when the content of the first adhesive composition and the second adhesive composition is less than 0.8wt% relative to the content of the electrolyte solution, the adhesive strength between the electrodes 110 and 150 and the separators 210 and 250 or between the lower separator 210 and the upper separator 250 due to the first adhesive part 310 and the second adhesive part 350 may be excessively reduced. In addition, when the content of the first adhesive composition and the second adhesive composition exceeds 1. 2wt.% relative to the content of the electrolyte solution, the first adhesive part 310 positioned between the electrodes 110 and 150 and the separators 210 and 250 is not easily dispersed and dissolved in the electrolyte solution, which may obstruct the lithium ion path to generate an uncharged region.

Further, the content of the first adhesive composition may be from 0.6 wt.% or more to 0.9 wt.% or less, and the content of the second adhesive composition may be from 0.1 wt.% or more to 0.45 wt.% or less. More specifically, the content of the first adhesive composition may be form 0.65 wt.% or more to 0.85 wt.% or less, and the content of the second adhesive composition may be from 0.15 wt.% or more to 0.4 wt.% or less. In one example, the content of the first adhesive composition may be from 0.7 wt.% or more to 0.8 wt.% or less, and the content of the second adhesive composition may be from 0.15 wt.% or more to 0.35 wt.% or less.

Therefore, the battery cell 1000 according to the embodiment of the disclosure can include the first adhesive composition and the second adhesive composition in a ratio within the above-mentioned range to be fixed between the electrodes 110 and 150 and the separators 210 and 250, whereby the first adhesive part 310 and the second adhesive part 350 can be easily dispersed and dissolved in the electrolyte solution even while preventing the misalignment of an electrode.

Unlike the same, when the content of the first adhesive composition is less than 0.6 wt.% or more than 0.9 wt.%, the adhesive strength between the first adhesive part 310 and the electrode is insufficient, which causes electrode misalignment, or alternatively, the first adhesive part 310 is not easily dispersed and dissolved in the electrolyte solution, which may obstruct the lithium ion path to generate an uncharged region.

Further, when the content of the second adhesive composition is less than 0.1 wt.% or more than 0.45 wt.%, the adhesive strength between the lower separator 210 and the upper separator 250 is excessively reduced, or the content of the adhesive composition of the second adhesive part 350 is too large, so that the second adhesive part 350 may deviate from the surface area that can be formed.

In addition, when the second adhesive composition is composed of at least one of a rubber-based material, a polyamide-based material, and a polyurethane-based material having a small dispersion degree in the electrolyte solution, the content of the second adhesive composition may be from 0.1 wt.% or more to 0.2 wt.% or less relative to the content of the electrolyte solution. More specifically, in this case, the content of the second adhesive composition may be from 0.12 wt.% or more to 0.18 wt.% or less relative to the content of the electrolyte solution. In one example, in this case, the content of the second adhesive composition may be from 0.14 wt.% or more to 0.16 wt.% or less relative to the content of the electrolyte solution.

Therefore, in the battery cell 1000 according to the embodiment of the disclosure, even if the dispersion degree of the second adhesive composition is relatively small, the second adhesive composition can be contained in an amount in the above-described range to be fixed between the electrodes 110 and 150 and the separators 210 and 250, so that the first adhesive part 310 and the second adhesive part 350 may be easily dispersed and dissolved in the electrolyte solution even while preventing an misalignment of the electrode,

Unlike the same, when the content of the second adhesive composition is less than 0.1 wt.% or more than 0.2 wt.%, there is a problem that the adhesive strength between the lower separator 210 and the upper separator 250 is excessively reduced, or the content of the adhesive composition of the second adhesive part 350 is too large, which causes a reduction in the dispersion degree.

Hereinafter, the content of the present disclosure will be described with reference to more specific examples, but the following examples are for illustrative purposes only, and the scope of rights of the present disclosure is not limited thereto.

### <Experimental Example 1- Measurement of dispersion degree>

Based on the electrolyte solution in which the lithium salt of 1M LiPF₆ was mixed in the ratio of EC: EMC = 3: 7, the dispersion degrees of an ethylene-vinyl acetate (EVA)-based material, an acrylic-based material, an epoxy-based material, a polyolefin-based material, a rubber-based material, a polyamide-based material, and a polyurethane-based material as an adhesive composition were measured, respectively.

Here, the acrylic-based material was acResin 204UV available from BASF, the EVA-based material was Technomelt 4046 from Henkel, the epoxy-based material was Lotite EA608 from Henkel, the polyolefin-based material was Supra502 from Henkel, the rubber-based material was 2802dispomelt from Henkel, the polyamide-based material was HPX 002 from Henkel, and the polyurethane-based material was EH9702 from Fuller. In addition, Fig. 5 is the result of dispersion degree of Technomelt 4046, wherein the content of the adhesive composition was increased from left to right, and the dispersion degree was measured according to the content. As shown in the result from the rightmost side of Fig. 5, it appeared to be suspended at 1 wt.%, which was expressed as NG. In addition, experiments were performed on other materials in the same manner, and the results are shown in Table 1 below.

**[Table 1]**

| | Adhesive composition | Dispersion degree (based on electrolyte solution) | | | | | |
|---|---|---|---|---|---|---|---|
| | | 0.02wt% | 0.25wt% | 0.5wt% | 0.75wt% | 1. wt% | 1.25wt% |
| Acrylic-based | acResin 250UV | OK | OK | OK | OK | OK | NG |
| EVA-based | Technomelt 4046 | OK | OK | OK | OK | NG | NG |
| Epoxy-based | Lotite EA608 | OK | OK | OK | OK | NG | NG |
| Polyolefin-based | Supra502 | OK | OK | NG | NG | NG | NG |
| Rubber-based | 2802dispomelt | OK | NG | NG | NG | NG | NG |
| Polyamide-based | HPX 002 | OK | NG | NG | NG | NG | NG |
| Polyurethane-based | EH9702 | OK | NG | NG | NG | NG | NG |

### <Example 1>

LiNi_{0.6}Mn_{0.2}Co_{0.2}O₂ as a cathode active material, carbon black as a conductive material, and polyvinylidene fluoride (PVdF) as a binder were respectively used, and NMP as a solvent was added to a mixture of cathode active material: conductive material: binder in a weight ratio of 96: 2: 2 to prepare a cathode active material slurry. The cathode active material slurry was applied to an aluminum current collector, then dried and rolled to manufacture a cathode.

An artificial graphite as an anode active material, carbon black as a conductive material, and SBR emulsion aqueous solution as a binder were respectively used, and water was added to a mixture of anode active material: conductive material: binder in a weight ratio of 96: 1: 5 to prepare an anode active material slurry. The anode active material slurry was applied to a copper current collector, then dried and rolled to manufacture an anode.

A slurry mixed with Al₂O₃ and PVDF in a weight ratio of 94:6 was applied on both sides (each thickness: 3 ,um) of a base sheet (thickness: 10 ,um) made of polyethylene/polypropylene, and dried at 60°C to manufacture a separator. The separator is referred to as an upper separator and a lower separator depending on the position.

As the electrolyte solution, a solution in which the lithium salt of 1M LiPF₆ was mixed in the ratio of EC: EMC = 3: 7 was added and prepared.

The manufactured lower separator, anode, upper separator, and cathode were alternately stacked in this order to manufacture a unit cell in which a first adhesive part composed of acResin 250UV having a content of 0.75 wt.% relative to the content of the electrolyte solution was positioned between the separator and the anode and between the separator and the anode, and a second adhesive part composed of acResin 250UV having a content of 0.25 wt.% relative to the content of the electrolyte solution was positioned between the upper separator and the lower separator.

### <Example 2>

A unit cell was manufactured in the same manner as in Example 1, except that in Example 1, a composition composed of Lotite EA608 was used for the first adhesive part.

### <Example 3>

A unit cell was manufactured in the same manner as in Example 1, except that in Example 1, a composition composed of Technomelt 4046 was used for the first adhesive part.

### <Example 4>

A unit cell was manufactured in the same manner as in Example 1, except that in Example 1, a composition composed of Supra502 was used for the first adhesive part.

### < Example 5>

A unit cell was manufactured in the same manner as in Example 1, except that in Example 1, a composition composed of Lotite EA608 was used for the first adhesive part, and a composition composed of Supra502 was used for the second adhesive part.

### < Example 6>

A unit cell was manufactured in the same manner as in Example 1, except that in Example 1, a composition composed of Technomelt 4046 was used for the first adhesive part, and a composition composed of Supra502 was used for the second adhesive part.

### <Example 7>

A unit cell was manufactured in the same manner as in Example 1, except that in Example 1, a composition composed of 2802dispomelt having a content of 0.15 wt.% relative to the content of the electrolyte solution was used for the second adhesive part.

### <Comparative Example 1>

A unit cell was manufactured in the same manner as in Example 1, except that in Example 1, a composition having a content of 0.25 wt.% relative to the content of the electrolyte solution was used for the first adhesive part, and a composition having a content of 0.75 wt.% relative to the content of the electrolyte solution was used for the second adhesive part.

### <Comparative Example 2>

A unit cell was manufactured in the same manner as in Example 1, except that in Example 1, a composition having a content of 0.5 wt.% relative to the content of the electrolyte solution was used for the first adhesive part, and a composition having a content of 0.25 wt.% relative to the content of the electrolyte solution was used for the second adhesive part.

### <Comparative Example 3>

A unit cell was manufactured in the same manner as in Example 1, except that in Example 1, a composition having a content of 0.5 wt.% relative to the content of the electrolyte solution was used for the second adhesive part.

### <Comparative Example 4>

A unit cell was manufactured in the same manner as in Example 1, except that in Example 1, a composition composed of Supra502 was used for the first adhesive part, and a composition composed of Supra502 was used for the second adhesive part.

### <Comparative Example 5>

A unit cell was manufactured in the same manner as in Example 1, except that in Example 1, a composition composed of Supra502 was used for the first adhesive part.

### <Experimental Example 2 - Measurement of dispersion degree, viscosity, and ionic conductivity>

For the battery cells manufactured in Examples 1 to 7 and Comparative Examples 1 to 8, the dispersion degree, viscosity, and ionic conductivity according to the content of the adhesive composition contained in the first adhesive part and the second adhesive part relative to the content of the electrolyte solution were measured, respectively.

The dispersion degree was measured in the same manner as in Experimental Example 1, and the results are shown in Table 2 below.

The ionic conductivity was measured with an ionic conductivity measuring device using Cond probe InLab 710 instrument (Mettler Toledo).

The viscosity was measured under the condition of 10 rpm by replacing the spindle part of Brookfield DV2T LV TJ10 model machine with a cone and plate, and applying a CPA-40Z cone.

Here, the viscosity and the ionic conductivity were judged as acceptable if the lithium salt of 1M LiPF6 is within ± 10% based on the electrolytic solution mixed with EC : EMC = 3:7 (viscosity of 3.78cPs@25°C, and ionic conductivity of 8.65mS/cm). The results are shown in Table 2 below.

**[Table 2]**

| | First adhesive part | | Second adhesive part | | Dispers ion degree | Viscosity (cPs@25°C) | Ionic conducti vity (mS/cm) |
|---|---|---|---|---|---|---|---|
| | Compon ent | Content | Componen t | Content | | | |
| Example 1 | acResin 250UV | 0.75wt% | acResin 250UV | 0.25wt% | OK | 4.08 | 8.45 |
| Example 2 | acResin 250UV | 0.75wt% | Loctite EA608 | 0.25wt% | OK | 4.10 | 8.40 |
| Example 3 | acResin 250UV | 0.75wt% | Technome lt 4046 | 0.25wt% | OK | 4.11 | 8.42 |
| Example 4 | acResin 250UV | 0.75wt% | Supra502 | 0.25wt% | OK | 4.11 | 8.27 |
| Example 5 | Loctite EA608 | 0.75wt% | Supra502 | 0.25wt% | OK | 4.17 | 8.41 |
| Example 6 | Techno melt 4046 | 0.75wt% | Supra502 | 0.25wt% | OK | 4.21 | 8.33 |
| Example 7 | acResin 250UV | 0.75wt% | 2802dispo melt | 0.15wt% | OK | 4.15 | 8.25 |
| Comparat ive Example 1 | acResin 250UV | 0.25wt% | acResin 250UV | 0.75wt% | OK | 4.08 | 8.45 |
| Comparat ive Example 2 | acResin 250UV | 0.5wt% | acResin 250UV | 0.25wt% | OK | 3.95 | 8.56 |
| Comparat ive Example 3 | acResin 250UV | 0.75wt% | acResin 250UV | 0.5wt% | NG | - | - |
| Comparat ive Example 4 | Supra50 2 | 0.75wt% | Supra502 | 0.25wt% | NG | - | - |
| Comparat ive Example 5 | Supra50 2 | 0.75wt% | acResin 250UV | 0.25wt% | NG | - | - |

### <Experimental Example 3 (Measurement of Electrode Misalignment)>

For the unit cells manufactured in Examples 1 to 5 and Comparative Examples 1 to 8, the electrode misalignment was measured at a resolution of 33um/pixel under the conditions of 170kV, 200umA, and 34W by using Computed Tomography (CT) Scanner from GE. The results are shown in Table 3 below.

**[Table 3]**

| | First adhesive part | | Second adhesive part | | Electrode misalignment |
|---|---|---|---|---|---|
| | Component | Content | Component | Content | |
| Example 1 | acResin 250UV | 0.75wt% | acResin 250UV | 0.25wt% | OK |
| Example 2 | acResin 250UV | 0.75wt% | Loctite EA608 | 0.25wt% | OK |
| Example 3 | acResin 250UV | 0.75wt% | Technomelt 4046 | 0.25wt% | OK |
| Example 4 | acResin 250UV | 0.75wt% | Supra502 | 0.25wt% | OK |
| Example 5 | Loctite EA608 | 0.75wt% | Supra502 | 0.25wt% | OK |
| Example 6 | Technomelt 4046 | 0.75wt% | Supra502 | 0.25wt% | OK |
| Example 7 | acResin 250UV | 0.75wt% | 2802dispomelt | 0.15wt% | OK |
| Comparati ve Example 1 | acResin 250UV | 0.25wt% | acResin 250UV | 0.75wt% | NG |
| Comparati ve Example 2 | acResin 250UV | 0.5wt% | acResin 250UV | 0.25wt% | NG |
| Comparati ve Example 3 | acResin 250UV | 0.75wt% | acResin 250UV | 0.5wt% | OK |
| Comparati ve Example 4 | Supra502 | 0.75wt% | Supra502 | 0.25wt% | OK |
| Comparati ve Example 5 | Supra502 | 0.75wt% | acResin 250UV | 0.25wt% | OK |

### <Analysis of experimental results>

Referring to Table 1 to Table 3, when a composition composed of acResin 250UV having a content of 0.75 wt.% was used for the first adhesive part and a composition composed of acResin 250UV, Loctite EA608, and Technomelt 4046 each having a content of 0.25 wt.% was used for the second adhesive part as in Examples 1 to 3, it can be confirmed that the dispersion degree, viscosity, and ionic conductivity are all excellent, and an electrode misalignment is not generated.

Unlike the same, when a composition composed of Supra502 with a content of 0.75 wt.% was used for the first adhesive part and a composition composed of Supra502 with a content of 0.25 wt.% was used for the second adhesive part, it can be confirmed that an electrode misalignment is not generated, but the dispersion degree is too low, and the viscosity and ionic conductivity cannot be measured. In addition, the same interpretation can be applied even to the case of 2802dispomelt, HPX 002 and EH9702, having low dispersion degree.

Therefore, when the dispersion degree of the first adhesive part and the second adhesive part is the same or similar to each other, it can be confirmed that unlike Comparative Example 4, it is suitable that the first adhesive part and the second adhesive part are comprised of at least one of acResin 250UV, Loctite EA608, and Technomelt 4046 having a relatively high dispersion degree, respectively, as in Examples 1 to 3.

Further, in the case of Comparative Example 2 in which the total content of the first adhesive part and the second adhesive part is small unlike Example 1, it can be confirmed that the electrode misalignment is generated. Further, in the case of Comparative Example 3, in which the total content of the first adhesive part and the second adhesive part is large unlike Example 1, it can be confirmed that the dispersion degree is excessively low, and the viscosity and ionic conductivity cannot be measured.

Therefore, it can be confirmed that the total content of the first adhesive part and the second adhesive part is suitably included in the range of 0.8 wt.% or more to 1.2 wt.% or less, as in Example 1.

Further, unlike Example 1, when the total content of the first adhesive part and the second adhesive part is the same, but when the content of the first adhesive part is small and the content of the second adhesive part is large, it can be confirmed that the electrode misalignment is generated. Further, unlike Example 1, in the case of Comparative Example 2 having a small content of the first adhesive part, it can be confirmed that the electrode misalignment is generated. In addition, unlike Example 1, in the case of Comparative Example 3 having a large content of the second adhesive part, it can be confirmed that the dispersion degree is excessively low and thus, the viscosity and ionic conductivity cannot be measured.

Therefore, it can be confirmed that it is suitable that the content of the first adhesive part is included in the range of 0.6 wt.% or more to 0.9 wt.% or less, and the content of the second adhesive part is included in the range of 0.1 wt.% or more to 0.45 wt.% or less, as in Example 1.

In addition, referring to Tables 1 to 3, when a composition comprised of acResin 250UV, Loctite EA608, and Technomelt 4046 each having a content of 0.75 wt.% is used for the first adhesive part and a composition comprised of Supra502 having a content of 0.25 wt.% is used for the second adhesive part as in Examples 4 to 6, it can be confirmed that the dispersion degree, viscosity, and ionic conductivity are all excellent, and the electrode misalignment is not generated.

Unlike the same, as in Comparative Example 5, when a composition comprised of Supra502 having a content of 0.75 wt.% is used for the first adhesive part and a composition comprised of acResin 250UV having a content of 0.25 wt.% is used for the second adhesive part, it can be confirmed that the electrode distortion is not generated, but the dispersion is excessively low and thus, the viscosity and ionic conductivity cannot be measured. In addition, the same interpretation can be applied even to the case where 2802dispomelt, HPX 002, and EH9702 having a lower dispersion degree than Supra502 are used for the first adhesive part.

Therefore, when the difference between the dispersion degrees of the first adhesive part and the second adhesive part is large, it can be confirmed that unlike Comparative Example 5, it is suitable that the first adhesive part is composed of at least one of acResin 250UV, Loctite EA608, and Technomelt 4046 having a relatively high dispersion degree and the second adhesive part is comprised of at least one of Supra502, 2802dispomelt, HPX 002, and EH9702 having a relatively low dispersion degree, as in Examples 4 to 6.

In addition, in the case of Comparative Example 3 in which the content of the first adhesive part is large unlike Example 4, it can be confirmed that the electrode misalignment is not generated, but the dispersion degree is excessively low and thus, the viscosity and ionic conductivity cannot be measured. In addition, when the content of the second adhesive part increases unlike Example 4, the dispersion degree is excessively low and thus, the viscosity and ionic conductivity cannot be measured.

Therefore, it can be confirmed that it is suitable that the content of the first adhesive part is included in the range of 0.6 wt.% or more to 0.9 wt.% or less, and the content of the second adhesive part is included in the range of 0.1 wt.% or more to 0.45 wt.% or less as in Example 1.

In addition, referring to Tables 1 to 3, when a composition composed of acResin 250UV with a content of 0.75 wt.% was used for the first adhesive part and a composition composed of 2802 dispomelt with a content of 0.15 wt.% is used for the second adhesive part as in Example 7, it can be confirmed that the dispersion degree, viscosity, and ionic conductivity are all excellent, and the electrode misalignment is not generated.

Unlike the same, if the dispersion degree of the second adhesive part is excessively low and thus, the viscosity and ionic conductivity cannot be measured.

Therefore, in the case of 2802dispomelt, HPX 002, and EH9702 in which the dispersibility of the adhesive composition included in the second adhesive part is excessively low, it can be confirmed that it is suitable that the content of the second adhesive part is included in a range of 0.1 wt.% or more to 0.2 wt.% or less as in Example 7.

Fig. 7 is a cross-sectional view showing an electrode assembly according to an embodiment of the present disclosure.

Referring to FIG. 7, the electrode assembly 3 according to the present embodiment may include an electrode stack 40 manufactured by repeatedly forming the basic unit 30 a plurality of times. Here, the basic unit 30 may be a unit in which the separator 322 is folded to have a zigzag shape, covers the electrode 31, and the electrode 31 and the separator 322 are stacked. That is, in the basic unit 30, one side and the other side of the separator 322 are sequentially folded to cover the electrode 31, and the electrode 31 and the separator 322 may be sequentially stacked.

A fixing tape may be attached to the electrode assembly 3, but one end of the separator 322 may cover a portion of the outer surface of the electrode stack 40 instead of the fixing tape. The basic unit 30 of the present embodiment may be in a state in which the electrodes 3112 and 3122 and the separator 322 are adhered to each other with an adhesive 34. Accordingly, the alignment between the electrodes 3112 and 3122 and the separator 322 may be maintained by the adhesive force of the adhesive 34.

In the electrode stack 40 of this embodiment, the separator 322 covers the upper and lower portions and one side of the electrodes 3112 and 3122, so that the stacking alignment of the basic units 30 can be maintained without the fixing tape. In addition, when the fixing tape is attached to the outside of the electrode stacked body 40 of this embodiment or one end of the separator 322 is wrapped around it, the stacking alignment of the basic units 30 is more stably maintained.

Also, in the electrode assembly 3 manufactured in this embodiment, the adhesive 34 may be disposed at the same position between the electrodes 3112 and 3122 and the separator 322. For example, as shown in FIG. 7 , in the electrode assembly 3 of this embodiment, the adhesive 34 positioned between the lower portion of the first electrode 3112 and the separator 322 and the adhesive 34 between the upper portion of the first electrode 3112 and the separator 322 may be disposed on the same vertical line with respect to the bottom surface of the first electrode 3112 or the separator 322, respectively, and the gap at which the adhesive 34 is disposed may be equal to each other. This may be similarly explained in the case of the adhesive 34 positioned between the second electrode 3122 and the separator 322.

Accordingly, in the electrode assembly 3 manufactured in this embodiment, the adhesive 34 is disposed at the same position between the electrodes 3112 and 3122 and the separator 322, so that there is an advantage in that the process time and efficiency can be increased.

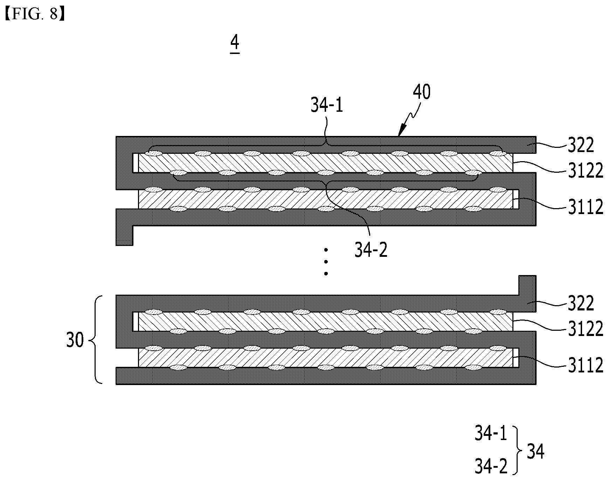

Fig. 8 is a cross-sectional view showing an electrode assembly according to another embodiment of the present disclosure.

Referring to FIG. 8, in the electrode assembly 4 according to the present embodiment, the adhesive 34 is disposed between the electrodes 3112 and 3122 and the separator 322, and the adhesive 34 disposed in adjacent layers may be arranged in a staggered form. For example, as shown in FIG. 8, in the electrode assembly 4 of this embodiment, the first adhesive 34-1 positioned between the lower portion of the first electrode 3112 and the separator 322 and the second adhesive 34-2 positioned between the upper portion of the first electrode 3112 and the separator 322 may be disposed to be shifted from each other. In this case, the first adhesive 34-1 and the second adhesive 34-2 may be disposed to be shifted from each other, and may be applied at the same distance. This may be similarly explained in the case of the adhesive 14 positioned between the second electrode 3122 and the separator 322.

However, the present invention is not limited thereto, and the structure in which the first adhesive 34-1 and the second adhesive 34-2 are displaced from each other may be manufactured by applying various methods.

Accordingly, in the electrode assembly 4 of this embodiment, the adhesive 34 is disposed between the electrodes 3112 and 3122 and the separator 322, and the adhesive 34 disposed in adjacent layers is staggered. Thus, it is possible to minimize an increase in the thickness of the electrode assembly 4 due to the adhesive 34. In addition, since the adhesives 34 disposed in adjacent layers are displaced from each other, the adhesive 34 may be more easily dissolved in the electrolyte included in the battery cell described above.

The first adhesive composition included in the first adhesive part 310 may be used as the adhesive 34 used in the electrode assemblies 3 and 4 according to FIGS. 7 and 8.

Although the invention has been shown and described with reference to the preferred embodiments, it is to be understood that the invention is not limited to the disclosed embodiments, but, on the contrary, is intended to cover various modifications and equivalent arrangements included within the spirit and scope of the appended claims.

### [Description of Reference Numerals]

100: unit cell
110: first electrode
150: second electrode
210: lower separator
250: upper separator
310: first adhesive part
350: second adhesive part
1000: battery cell
1100: electrode assembly
2000: battery case
3000: electrode lead
4000: lead film

## Claims

1. A unit cell comprising:
a separator and an electrode that are alternately stacked by a predetermined number;
a first adhesive part that is positioned between the separator and the electrode and is composed of a first adhesive composition; and
a second adhesive part that is positioned between the separator and the other separator and is composed of a second adhesive composition,
wherein a dispersion degree of the first adhesive composition is larger than a dispersion degree of the second adhesive composition.

2. The unit cell of claim 1, wherein:
the first adhesive composition is composed of at least one of an ethylene-vinyl acetate (EVA)-based material, an acrylic-based material, and an epoxy-based material, and
the second adhesive composition is composed of at least one of an ethylene-vinyl acetate (EVA)-based material, an acrylic-based material, an epoxy-based material, a polyolefin-based material, a rubber-based material, a polyamide-based material, and a polyurethane-based material.

3. The unit cell of claim 1, wherein:
the second adhesive composition is composed of at least one of a polyolefin-based material, a rubber-based material, a polyamide-based material, and a polyurethane-based material.

4. The unit cell of claim 1, wherein:
the separator comprises a lower separator and an upper separator, and
the electrode comprises a first electrode and a second electrode,
wherein the lower separator, the first electrode, the upper separator, and the second electrode are stacked in this order.

5. The unit cell of claim 4, wherein:
the first adhesive part is positioned at least one selected from between the first electrode and the lower separator, between the first electrode and the upper separator, and between the second electrode and the upper separator.

6. The unit cell of claim 5, wherein:
the second adhesive part is positioned between the upper separator and the lower separator.

7. The unit cell of claim 1, wherein:
the first adhesive part and the second adhesive part are each formed in a pattern including a plurality of dots.

8. The unit cell of claim 7, wherein:
the plurality of dots are spaced apart from each other.

9. An electrode assembly formed by alternately stacking the unit cell of claim 1, the electrode assembly being configured such that:
the first adhesive part includes an adhesive pattern disposed at the same position between the electrode and the separator.

10. An electrode assembly formed by alternately stacking the unit cell of claim 1, the electrode assembly being configured such that:
the first adhesive part includes an adhesive pattern disposed at a staggered form between the electrode and the separator.

11. A battery cell comprising an electrolyte solution together with an electrode assembly in which the unit cells of claim 1 are alternately stacked.

12. The battery cell of claim 11, wherein:
the first adhesive part is dissolved in the electrolyte solution.

13. The battery cell of claim 11, wherein:
the first adhesive composition is composed of at least one of an ethylene-vinyl acetate (EVA)-based material, an acrylic-based material, and an epoxy-based material, and
the second adhesive composition is composed of at least one of an ethylene-vinyl acetate (EVA)-based material, an acrylic-based material, an epoxy-based material, a polyolefin-based material, a rubber-based material, a polyamide-based material, and a polyurethane-based material.

14. The battery cell of claim 13, wherein:
a content of the first adhesive composition and the second adhesive composition is from 0.8 wt.% or more to 1.2 wt.% or less relative to the content of the electrolyte solution.

15. The battery cell of claim 14, wherein:
the content of the first adhesive composition is from 0.6 wt.% or more to 0.9 wt.% or less relative to the content of the electrolyte solution, and
the content of the second adhesive composition is from 0.1 wt.% or more to 0.45 wt.% or less relative to the content of the electrolyte solution.

16. The battery cell of claim 13, wherein:
the second adhesive composition is composed of at least one of a rubber-based material, a polyamide-based material, and a polyurethane-based material.

17. The battery cell of claim 16, wherein:
the content of the second adhesive composition is from 0.1 wt.% or more to 0.2 wt.% or less relative to the content of the electrolyte solution.

18. The battery cell of claim 11, wherein:
the electrolyte solution is composed of at least one of an organic liquid electrolyte, an inorganic liquid electrolyte, a solid polymer electrolyte, a gel-type polymer electrolyte, a solid inorganic electrolyte, and an inorganic molten electrolyte.

19. The battery cell of claim 1, wherein:
the separator is folded to have a zigzag shape.

20. A method of fabricating a unit cell, comprising:
applying a first adhesive to either or both of (i) a first face of an electrode or (ii) an abutment region of a first separator;
applying the first adhesive to either or both of (i) a second face of the electrode or (ii) an abutment region of a second separator, the second face of the electrode being on an opposite side of the electrode from the first face;
applying a second adhesive to either or both of (i) a peripheral region of the first separator or (ii) a peripheral region of the second separator; and
forming at least a portion of a stack by stacking the electrode between the first separator and the second separator such that the first face of the electrode abuts the abutment region of the first separator and the second face of the electrode abuts the abutment region of the second separator, the stack being formed such the peripheral region of each of the first and second separators extends outwardly beyond an edge of the electrode, the peripheral regions of each of the first and second separators opposing one another without the electrode interposed therebetween;
wherein the first adhesive is configured to have a degree of dispersion in an electrolyte that is greater than a degree of dispersion of the second adhesive in the electrolyte.

21. The method of claim 20, wherein the degree of dispersion of the first adhesive in the electrolyte is greater than the degree of dispersion of the second adhesive in the electrolyte.

22. The method of claim 20, wherein the peripheral region of each of the first and second separators extends around a perimeter of the respective first and second separator, such that each of the peripheral regions encircles the abutment region of the respective first and second separator.

23. The method of claim 20, wherein:
the first adhesive is composed of at least one of an ethylene-vinyl acetate (EVA)-based material, an acrylic-based material, and an epoxy-based material, and
the second adhesive is composed of at least one of an ethylene-vinyl acetate (EVA)-based material, an acrylic-based material, an epoxy-based material, a polyolefin-based material, a rubber-based material, a polyamide-based material, and a polyurethane-based material.

24. The method of claim 20, wherein the first adhesive and the second adhesive are each applied in a respective pattern of dots spaced apart from each other.

25. The method of claim 24, wherein the dots in the pattern of dots of the first adhesive is arranged in a grid of rows and columns of dots.

26. A method of fabricating a battery cell, comprising:
forming a stack formed by alternately stacking the unit cell of claim 20, and
positioning the stack and an electrolyte in a battery case.

27. The method of claim 26, further comprising dissolving at least a portion of the first adhesive into the electrolyte.

28. The method of claim 26, wherein the electrolyte is a solution composed of at least one of an organic liquid electrolyte, an inorganic liquid electrolyte, a solid polymer electrolyte, a gel-type polymer electrolyte, a solid inorganic electrolyte, and an inorganic molten electrolyte.

29. The method of claim 26, wherein a total amount of the first adhesive in the battery case is from 0.6% to 0.9% by weight of a total amount of the electrolyte in the battery case.

30. The method of claim 26, wherein a total amount of the second adhesive in the battery case is from 0.1% to 0.45% by weight of a total amount of the electrolyte in the battery case.

31. The method of claim 26, wherein a total amount of the first adhesive and the second adhesive together in the battery case is from 0.8% to 1.2% by weight of a total amount of the electrolyte in the battery case.

32. The method of claim 31, wherein the total amount of the first adhesive in the battery case is from 0.6% to 0.9% by weight of the total amount of the electrolyte in the battery case, and wherein the total amount of the second adhesive in the battery case is from 0.1% to 0.45% by weight of the total amount of the electrolyte in the battery case.

33. The method of claim 26, wherein the second adhesive is composed of at least one of a polyolefin-based material, a rubber-based material, a polyamide-based material, and a polyurethane-based material.

34. The method of claim 33, wherein a total amount of the second adhesive in the battery case is from 0.1% to 0.2% by weight of a total amount of the electrolyte in the battery case.
